# EUROPEAN PATENT SPECIFICATION

(11) **EP 4 043 330 B1**
(45) Date of publication and mention of the grant of the patent: **17.01.2024**
(21) Application number: 21156803.5
(22) Date of filing: 12.02.2021
(51) Int. Cl.: B63B 7/08, B63B 1/20, B63B 1/00

(54) **MARINE VESSEL COMPRISING A PLANING HULL**
WASSERFAHRZEUG MIT EINEM PLANIERENDEN RUMPF
COQUE DE NAVIRE COMPRENANT UNE COQUE PLANANTE

(43) Date of publication of application: 17.08.2022
(73) Proprietor: The Ultimate Boat Company Limited, Douglas IM1 1AH (IM)
(72) Inventor: Moxham, John, Southampton, Hampshire SO40 2NG (GB); MacAndrew, Colin, IM1 1AH Douglas (IM)
(74) Representative: Boult Wade Tennant LLP

(56) References cited:
- EP-A1- 0 033 563
- JP-B2- 6 554 032
- US-A- 3 040 687
- US-A- 4 004 542
- US-A- 4 672 905
- US-A- 5 476 061
- US-A1- 2008 011 215
- US-A1- 2010 313 808
- US-A1- 2015 329 179
- US-A1- 2016 129 970
- US-B1- 6 223 677
- US-B1- 6 425 341
- US-B2- 6 871 612

## Description

### Technical Field

This disclosure is directed towards a marine vessel comprising a planing hull and a method of operating such a marine vessel.

### Background

It is common for marine vessel hulls to be designed to promote planing at high speeds. When such a marine vessel operates at low speed its weight is supported by the buoyancy force exerted by the water and the hull operates as a displacement hull. At higher speeds, however, the hull is designed such that the weight of the marine vessel is predominantly supported by hydrodynamic lift. In order to promote planing such hulls are typically designed with a relatively flat bottomed aft section to provide a surface with an angle of attack that increases the hydrodynamic lift. In addition, the marine vessel is designed with a high power to weight ratio to assist with bringing the vessel on plane. However, marine vessels with flat bottomed hulls are relatively unstable in the water and usually have large turning radiuses at high speeds.

US2015/0329179A1 discloses a hybrid hull form for monohull planing vessels with combined features of catamaran hulls and convention V-shaped hulls. The hull comprises a non-stepped V-shaped centre section extending along the entire length of the hull and two semi-sponsons comprising projections extending away from the centre-section and disposed along the length of said hull form on either side of the centre section. The centre section and semi-sponsons each define a running surface for the hull. The semi-sponsons provide buoyancy and hydrodynamic lift. However, such a hull shape is prone to slamming at planing speeds through the waves.

US20160129970A1 discloses a planing hull with at least one water-deflecting surface which extends rearwardly and outwardly in relation to a keel region and which is oriented and configured so as to create a lifting force, and also a forward thrust on the hull. US3040687A1 discloses a boat hull construction wherein the bottom thereof generally after the centre is of a smooth construction and the bow portion thereof is in the form of a plurality of longitudinally extending chines. US4004542A1 discloses a waterjet propelled boat utilizing a centre support pod which houses the lower portion of the waterjet propulsion unit, such boat also being provided with depending, longitudinally extending, stabilizing strakes along the major portion of the underside of its hull. US6425341 B1 discloses a hull comprising a keel having a forward keel portion having a forward planing surface formed thereon and a recess opening through and extending forward from a transom of the hull and meeting said keel at a step, a pair of aft planing surfaces each formed adjacent to and outboard of a respective one of said side walls and extending aft from the region of said step, and a pair of sponsons each formed outboard of a respective one of said aft planing surfaces. US5476061 A discloses a power boat hull with an outer running surface forming a channel with concave curvature which extends from the bow to the stern and shaped so that pressure builds in the channel during turning of the boat to lock the hull to water throughout the turn. JP 6554032B2 discloses a small-sized plaining boat comprising a hull with a bottom face shaped such that a left and right direction width of thereof is narrowed from a midship part toward a rear part in a cross direction. US4672905A discloses a boat hull including a V-shaped outer hull portion, and an opposed pair of narrow sponsons that depend downwardly from the gunwales to individual sponson base lines positioned between 5 degrees and two-thirds the V-hull dead rise angle. EP0033563A1 discloses a V-shaped bottom with planing supporting skids having the supporting surface thereof rising from the bow towards the stern and gradually projection from the section of said bottom, each supporting surface having a triangular conformation and each being provided with sidewalls forming the attachment elements for said skid to said bottom, the height of said wall gradually increasing from the bow towards the stern.

### Summary

An object of the present disclosure it to provide a marine vessel with an improved planing hull. A further object is to provide a marine vessel with a planing hull with improved stability. A further object is to provide a marine vessel with improved manoeuvrability, particularly during turns. A further object is to provide a marine vessel with reduced spray rising over the hull and into the cockpit.

The present disclosure therefore provides a marine vessel and a method of operating such a marine vessel in accordance with the claims.

When a standard vee hulled planing vessel moves at speed through water, water hits the bottom of the hull at an angle (the angle of attack), which causes a lifting force with equal and opposite reaction in the hull such that the vessel planes. The water is parted by the vee hull and moves upward towards the outer edge or chine of the hull. The water is then thrown away from the boat in the form of wash.

However, the marine vessel of the present disclosure also provides hydraulic lift to bring the vessel onto the plane and to maintain it on the plane. In particular, the vee bottom section is configured to, during use and/or when the marine vessel is propelled through water, direct water outwardly from the centreline towards the retainer walls. The retainer walls are configured to direct said outwardly directed water (i.e. that directed onto the retainer walls from the vee bottom section) downwardly for providing hydrodynamic or hydraulic lift to the marine vessel. The retainer walls prevent most of this wash from escaping outboard to the chine and as water cannot move downwardly and is incompressible, it lifts the hull upwards.

As a result, the marine vessel is much flatter (fore and aft) and level during propulsion and operates on the plane at a smaller angle of attack to the water surface than a standard vee hulled planing vessel. This has a number of significant benefits. The marine vessel rides in a more stable and aerodynamic position, thereby improving the comfort of the crew and reducing the energy consumed for the propulsion. The crew will also be able to see significantly more over the bow of the vessel because it is lower; this can be very beneficial in applications such as during rescues or the like.

In addition, the marine vessel is much better suited to carrying higher loads. When a normal vee hulled boat is loaded its stern sinks and its bow will naturally lift. A normal vee hulled boat also has to ride over a relatively large bow wave in order to plane, which can be difficult or impossible if the boat is heavily loaded. However, as the retainer walls of the present disclosure provide lift along the length of the underside of the marine vessel and the lift is not just focussed on the stern (although the lift force gradually decreases towards the bow as the retainer walls reduce in height), the vessel rides flatter and more level even when loaded. Thus the marine vessel can carry relatively heavier loads. By virtue of the lift maintaining the level and flat ride, the location of a high load within the vessel does matter as significantly as in a normal vee hulled boat. Furthermore, as the vessel rides flatter, the bow wave is smaller when getting onto the plane, meaning that high loads do not pose as significant an issue in order for the vessel to begin to plane.

A significant benefit of the ability of the marine vessel to carry heavier loads is that the power unit supplying the propulsive force can be heavier and, as a result, power units operated based upon renewal energy can be used. For example, the power unit may receive power from hydrogen sources, batteries or the like, all of which cause significant issue in normal vee hulled boats due to their weight. As a result, fossil fuel use can be reduced by the marine vessel.

In addition the marine vessel is very stable and manoeuvrable due to the grip the retainer walls have on the water during turns. In effect, the retainer walls substantially reduce the amount the marine vessel slides in the water during sharp turns and thus the marine vessel can turn in a tight circle.

The vee bottom section and retainer walls may therefore be shaped and sized to increase the resulting hydraulic lift, for example by surface area of the vee bottom section being significantly larger than that of the retainer walls (for example being at least twice the size or at least four times the size). In particular, a keel of the marine vessel may be formed by the vee bottom section and the keel is lower than the retainer walls. The vee bottom section may comprise a pair of lower main sections each extending outwardly from each side of the centreline along a lower main section width A. The retainer walls may extend along a retainer wall height B and the retainer wall height B may be less than about 0.5A in the stern section and/or an amidships section.

The vee bottom section may be sufficiently steeply angled to push water outwards towards the retainer walls and may extend outwardly from the centreline at a vee bottom angle α relative to horizontal, which may be in the range of from about 18 degrees to about 28 degrees inclusive in the stern section and/or an amidships section. The retainer wall may be sufficiently steeply angled to push water downwardly and may extend downwardly at a retainer wall angle β relative to horizontal, which may be in the range of from about 70 degrees to about 90 degrees inclusive in the stern section and/or amidships section. The angle between the vee bottom section and retainer walls may be in the range of from about 50 degrees or about 60 degrees to about 90 degrees inclusive or about 100 degrees inclusive and may be less than 90 degrees in the stern section and/or amidships section.

The retainer walls may be configured to control the amount of lift provided and the centre of lift can be altered fore and aft by discontinuing the retainer rails before they reach the hull stern. In particular, the retainer walls may not extend from and are separated from the hull stern. The vee bottom section may extend between the hull stern and the retainer walls. By not having retainer walls directly and the hull stern pressure can escape, thereby reducing the lift provided as no hydraulic lift is provided at the hull stern.

However, as the marine vessel of the present disclosure rides flatter than standard vee hulled planing vessel, the hull cuts through the waves and throws water spray up in a direction over the top of the bow section. Therefore, the bow section may comprise at least one spray deflector for deflecting spray from rising over the bow section, the at least one spray deflector comprising a deflection surface extending downwardly forwards along the centreline and outwards from the centreline. The spray deflector is arranged to deflect such spray downwardly and thus reduce the volume of spray reaching the deck of the marine vessel.

The marine vessel of the present disclosure comprises a bow section, a stern section, a centreline and a planing hull. The planing hull comprises a vee bottom section extending along the centreline from the stern section to the bow section and a pair of retainer walls extending from the stern section towards the bow section along either side of the vee bottom section. Each retainer wall extends downwardly parallel to, or at an acute angle to, the centreline.

The method of the present disclosure comprises propelling such a marine vessel through water such that the vee bottom section directs water outwardly from the centreline towards the retainer walls and the retainer walls downwardly direct said outwardly directed water such that lift is provided to the marine vessel by the downwardly directed water. Thus the marine vessel may be brought onto and/or maintained on the plane during propulsion.

In the present disclosure the term "centreline" refers to a vertical plane passing down the centre of the marine vessel from the vessel bow to the vessel stern and thus is the dividing plane between port and starboard sides of the marine vessel. The hull may be substantially symmetrical about the centreline.

In the present disclosure the term "forwards" refers to a direction from the stern through the bow of the marine vessel (i.e. the opposite of aft). In the present disclosure the terms "downwards" or "downwardly" refer to a direction towards the line of a keel of the marine vessel, at an acute angle to the direction of gravity and/or towards and into the water in which the marine vessel floats, preferably when the marine vessel is in a neutral, unladen and stopped position in the water. In the present disclosure the term "upwardly" refers to the opposite direction to downwardly. "Upper" and "lower" refer to upwards and downward positions respectively.

In the present disclosure the term "horizontal" means along or parallel to the orthogonal of the plane of the centreline. It will be appreciated that the horizontal may not necessarily be perpendicular to the direction of gravity as the marine vessel rocks and moves in water. In the present disclosure the term "outwardly" means in a horizontal direction away from the centreline towards the port or starboard sides of the marine vessel (i.e. laterally).

### Brief Description of the Drawings

By way of example only, embodiments of marine vessels of the present disclosure are now described with reference to, and as shown in, the accompanying drawings, in which:
FIGURE 1 is a schematic side elevation of the port side of a marine vessel comprising a hull in accordance with the present disclosure;
FIGURE 2A is a cross-sectional view through section A-A of Figure 1;
FIGURE 2B is a cross-sectional view through section B-B of Figure 1;
FIGURE 2C is a cross-sectional view through section C-C of Figure 1;
FIGURE 3 is a magnified view of a portion of Figure 2C illustrating the angles and relative dimensions of the hull of the present disclosure;
FIGURE 4 is a plan view of the underside of the marine vessel of Figures 1 to 3;
FIGURE 5 is a front view of the marine vessel of Figures 1 to 4;
FIGURE 6 is a magnified schematic side elevation showing the bow section of the port side of a further embodiment of a marine vessel in accordance with the present disclosure;
FIGURE 7 is a plan view of the underside of the marine vessel of Figure 6; and
FIGURE 8 is a front view of the marine vessel of Figures 6 and 7.

### Detailed Description

As illustrated in the Figures, the present disclosure provides a marine vessel 10 comprising a planing hull 11. In the present disclosure the term "planing hull" means that the hull 11 is designed such that at high speeds the weight of the marine vessel 10 is predominantly supported by hydrodynamic lift.

The marine vessel 10 of the present disclosure may be a powerboat and may be a rigid inflatable boat (RIB) as illustrated. Other suitable powerboats include recreational powerboats, cruisers, high performance powerboats, jet powerboats, jet skis and the like. For example, the marine vessel 10 may be less than 20 m long or less than 15 m long.

Although not illustrated in the Figures, in use the marine vessel is propelled through the water and the powerboat may comprise at least one power unit attached to at least one propulsor, such as a propeller or jet, to drive the powerboat through water. The at least one power unit may be a mechanical power unit, such as an internal combustion engine, or may be an electric power unit, such as a motor receiving energy from an electrical power source.

The marine vessel 10 comprises a bow section 14, a stern section 15 and a centreline 20 extending therebetween. The bow section 14 extends from a vessel bow 17 (i.e. the forward most part) of the marine vessel 10 and may extend along up to 25% of the length of the marine vessel 10. The stern section 15 extends from a vessel stern 18 (i.e. the rearmost part) of the marine vessel 10 and may extend along up to 25% of the length of the marine vessel 10. The marine vessel 10 may comprise a amidships section 19 extending between the bow and stern sections 14, 15. The marine vessel 10 may comprise port and starboard sides 21, 22 on either side of the centreline 20.

The marine vessel 10 may comprise an upper body 12 mounted to the hull 11. The upper body 12 may be mounted to an upper edge 13 of the hull 11 and may extend around the bow section 14 and port and starboard sides 21, 22 of the hull 11. The upper body 12 may form the vessel bow and/or stern 17, 18 of the marine vessel 10 and may at least partially form the bow and/or stern section 14, 15.

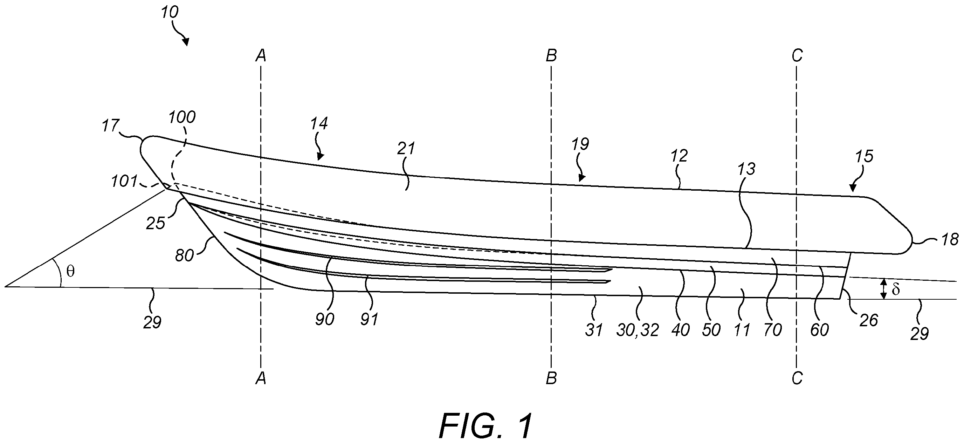

The upper body 12 may comprise a fender, such as in the case of the RIB illustrated in Figure 1. The fender may be flotation device such as an inflatable or foam fender. In the latter case, the marine vessel 10 may still be considered a RIB by virtue of the foam fender being considered a flotation device as required for certification of the marine vessel 10 as a RIB. The fender, whether inflatable or foam, may comprise an outer skin comprising a fabric, such as hypalon, polyurethane or polyvinylchloride. Alternatively, the upper body 12 may comprise a deck, gunwale or the like.

The hull 11 comprises a hull bow 25 adjacent to or forming the vessel bow 17 and a hull stern 26 adjacent to or forming the vessel stern 18. The bow section 14 comprises the hull bow 25 and the stern section 15 comprises the hull stern 26. In the illustrated embodiment the hull 11 comprises, ordered outwardly from the centreline 20, a vee bottom section 30, a pair of retainer walls 40, 41, a pair of outer hull sections 50, 51, a pair of outer chines 60, 61 and a pair of hull sides 70, 71. Each of the port and starboard sides 21, 22 may comprise part of the vee bottom section 30, a retainer wall 40, 41, an outer hull section 50, 51, an outer chine 60, 61 and a hull side 70, 71. Each of the vee bottom section 30, retainer walls 40, 41, outer hull sections 50, 51, outer chines 60, 61 and hull sides 70, 71 may extend from the hull stern 26 to the hull bow 25 along the centreline 20.

The hull 11 further comprises a stem 80 at the hull bow 25. The stem 80 may be raked and may extend aft downwardly or forwards upwardly. The vee bottom section 30, retainer walls 40, 41, outer hull sections 50, 51, outer chines 60, 61 and hull sides 70, 71 of each of the port and starboard sides 21, 22 may converge towards or into and meet at the stem 80. The stem 80 may be curved as illustrated and the radius of curvature of the stem 80 may be relatively smaller for marine vessels of relatively less length.

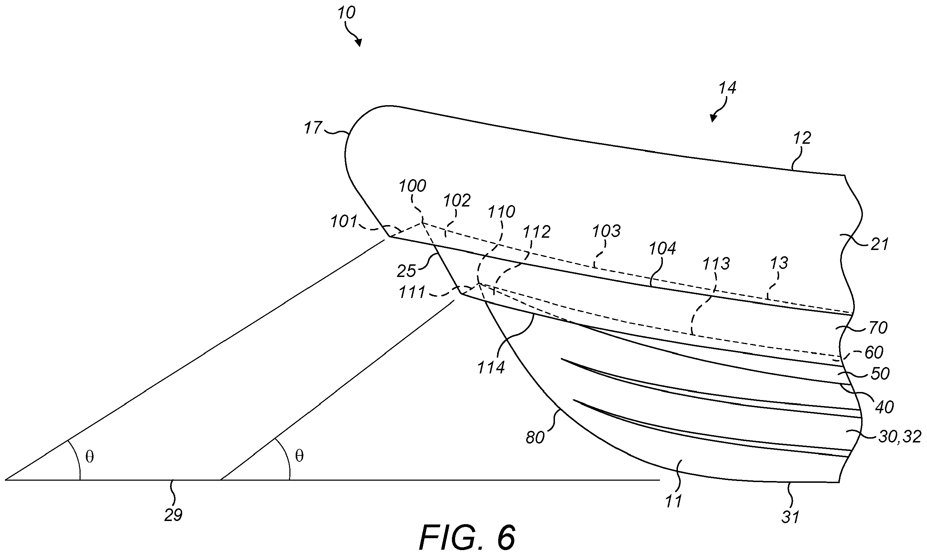

The hull 11 further comprises a keel 31 and the keel 31 may extend from the hull stern 26 towards the stem 80. The stem 80 may extend from the hull bow 25 to the keel 31. The keel 31 and/or stem 80 extend along or substantially in the plane of the centreline 20. In the present disclosure the term "keel" refers to the bottom most edge or part of the marine vessel 10. As best shown in Figures 1 and 6, the hull 11 may comprise or define a keel line 29 extending along and projected from the keel 31 and/or longitudinally (i.e. from the vessel bow 17 to the vessel stern 18) along the centreline 20.

The hull 11 comprises a vee bottom section 30 extending along the centreline 20 from the stern section 15, particularly the hull stern 26, towards the bow section 14, particularly to the hull bow 25. As illustrated, the vee bottom section 30 may extend entirely from the hull stern 26 to the bow section 14 and particularly to the stem 80. The vee bottom section 30 is V-shaped and forms the keel 31 of the marine vessel 10. The vee bottom section 30 beneficially reduces the impact felt by the crew when the hull 11 re-enters the water after being raised above the water after hitting a large wave. In particular, the vee bottom section 30 re-enters the water more gradually to reduce the impact. In addition, if the hull 11 is leaning to one side the greater surface area on that side provides more lift than the other side, thereby assisting with levelling the hull 11.

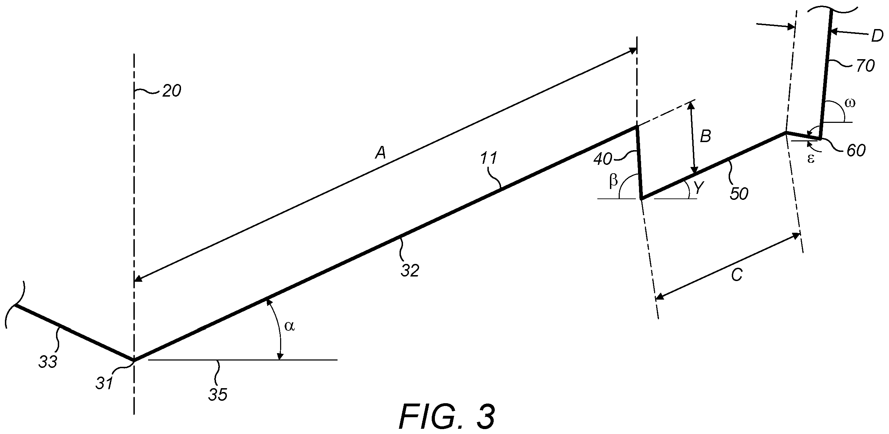

The vee bottom section 30 comprises a pair of lower main sections 32, 33 extending outwardly from each side of the centreline 20. The vee bottom section 30 is substantially symmetrical about the centreline 20. Each lower main section 32, 33 extends outwardly from the centreline 20 at a vee bottom angle α relative to horizontal. By way of an example, the horizontal is illustrated in Figure 3 by a horizontal bottom plane 35 orthogonal to the centreline 20. The vee bottom angle α may be at least about 18 degrees, less than about 28 degrees or in the range of from about 18 degrees to about 28 degrees inclusive in the stern section 15.

The vee bottom section 30 may extend across at least 50% of a beam (i.e. maximum outer width) of the marine vessel 10, particularly in the stern and amidships sections 15, 19. A lower main section width A is the width along each lower main section 32, 33 extending outwardly from the centreline 20. The lower main section width A varies depending upon the size and design of the marine vessel 10.

The vee bottom angle α and lower main section width A varies between the hull stern 26 and hull bow 25. In particular, the vee bottom angle α increases and/or the lower main section width A decreases towards the hull bow 25 and/or from the stern section 15, through the amidships section 19 and into the bow section 14.

The hull 11 may further comprise at least one pair of spray rails 90, 91, 92, 93 at least partially extending along the vee bottom section 30 on either side of the centreline 20. The at least one pair of spray rails 90, 91, 92, 93 may provide lift at the bow section 14 of the marine vessel 10 by directing spray downwardly from the hull 11. Each spray rail 90, 91, 92, 93 is located between the centreline 20 and one of the retainer walls 40, 41 and is elongate in a direction parallel to the centreline 20. As illustrated, the hull 11 may comprise two pairs of spray rails 90, 91, 92, 93 and the spray rails 90, 91, 92, 93 on each of the lower main sections 32, 33 are spaced apart from each other and from the centreline 20 and retainer wall 40, 41.

The spray rails 90, 91, 92, 93 may extend from adjacent the hull bow 25 or stem 80 towards the hull stern 26. The spray rails 90, 91, 92, 93 may not extend into the stern section 15 since this part of the marine vessel 10 rarely leaves the water such that they are not required. For example, the spray rails 90, 91, 92, 93 may extend from within about 10% of the length of the hull 11 from the hull bow 25 or stem 80 and may extend to less than two thirds of the length of the hull 11. Each spray rail 90, 91, 92, 93 may extend at a spray rail angle of at least about 10 degrees, less than about 15 degrees or in a range of from about 10 degrees to about 15 degrees inclusive relative to horizontal.

The hull 11 comprises retainer walls 40, 41 extending from the stern section 15 towards the bow section 14 and along and outwardly from either side of the vee bottom section 30 for providing hydrodynamic lift to the marine vessel 10. Each retainer wall 40, 41 extends between the vee bottom section 30 and an outer hull section 50, 51. The retainer walls 40, 41 of the port and starboard sides 21, 22 of the hull 11 meet at the hull bow 25. Each of the retainer walls 40, 41 may extend from the hull stern 26 or may be separated from the hull stern 26. For example, the retainer walls 40, 41 may only start in the stern section 15 at a distance from the hull stern 26 and the distance may be at least about 20 cm. The vee bottom section 30 may extend between the hull stern 26 and the retainer walls 40, 41.

Each retainer wall 40, 41 extends downwardly parallel to, or at an acute angle to, the centreline 20. Thus the retainer wall 40, 41 extends downwardly at a retainer wall angle β relative to horizontal and the retainer wall angle β is less than about 90 degrees, more than about 70 degrees or in the range of from about 70 degrees to about 90 degrees inclusive in the stern section 15. Such ranges are particularly effective at providing sufficient lift to the marine vessel 10 during planing.

The retainer walls 40, 41 do not extend downwardly lower than the keel 31 and the keel 31 is below or lower than the retainer walls 40, 41. A retainer wall height B, which is the dimension of each retainer wall 40, 41 in a direction extending away from the vee bottom section 30, may be sufficiently small such that the keel 31 is below or lower than the retainer walls 40, 41. Thus the retainer wall height B may be defined as B < A (sin α / cos β). The retainer wall height B may be less than about 0.5A, may be less than about 0.25A and/or may be in the range of from about 0.09A to about 0.22A inclusive in the stern section 15.

The retainer wall angle β and retainer wall height B may vary between the hull stern 26 and hull bow 25. In particular, the retainer wall height B may reduce towards the hull bow 25, which may because towards the hull bow 25 the retainer walls 40, 41 may not provide substantial lift as they are not in the water and instead act as spray rails. The retainer wall angle β may increase towards the hull bow 25 and/or from the stern section 15, through the amidships section 19 and into the bow section 14. Thus the retainer wall angle β may vary in the stern section 15 in a range of from about 70 degrees to about 90 degrees inclusive and may decrease to about or less than about 50 degrees in the bow section 14.

The hull 11 may comprise outer hull sections 50, 51 extending from the stern section 15 towards the bow section 14 and along and outwardly from the retainer walls 40, 41. Each outer hull section 50, 51 extends between a retainer wall 40, 41 and an outer chine 60, 61. The outer hull sections 50, 51 may be configured to provide lift to the hull 11 during a turn. In particular, the angle of attack of the outer hull sections 50, 51 may be configured to provide such lift during a turn.

Each outer hull section 50, 51 extends outwardly at an outer hull angle γ relative to horizontal. The outer hull angle γ may be similar to, such as within about 0 degrees to about ±5 degrees of or within about 0 degrees to about ±10 degrees of, the vee bottom angle α across any one cross-section through the breadth of the hull 11.

An outer hull width C, which is the length of each outer hull section 50, 51 in a direction extending outwardly from the centreline 20, vee bottom section 30 and retainer walls 40, 41, may be sufficiently large to provide sufficient lift during turning. The outer hull width C may be less than the lower main section width A and greater than the retainer wall height B. The outer hull width C may be less that about 0.5A and/or may be in the range of from about 0.2A to about 0.4A inclusive. The outer hull angle γ increases and/or the outer hull width C decreases towards the hull bow 25 and/or from the stern section 15, through the amidships section 19 and into the bow section 14. The outer hull width C may decrease to zero at the hull bow 25.

As best shown in Figure 1, the retainer walls 40, 41 and outer hull sections 50, 51 rise away from the keel 31 from the hull stern 26. Thus the retainer walls 40, 41 and outer hull sections 50, 51 have a greater longitudinal angle δ than the keel 31 and/or vee bottom section 30. The longitudinal angle δ is the angle relative to the horizontal plane and the keel line 29. The longitudinal angle of the keel 31 and keel line 29 may be about 0 degrees and the longitudinal angle δ of the retainer walls 40, 41 and outer hull sections 50, 51 may be in the range of from about zero degrees to about 10 degrees inclusive in at least the stern section 15, optionally also in the amidships section 19 and/or bow section 14. When a vee shaped hull banks when turning, it causes more drag which will slow the marine vessel down. The increased angle of the outer hull sections 50, 51 provide more lift and less drag, thereby keeping the hull 11 planing.

The hull 11 may comprise outer chines 60, 61 extending from the stern section 15 towards the bow section 14 and along and outwardly from the outer hull sections 50, 51. Each outer chine 60, 61 extends between an outer hull section 50, 51 and a hull side 70, 71. The outer chines 60, 61 may assist with throwing wash downwards rather than outwardly from the hull 11, thereby assisting with providing lift.

Each outer chine 60, 61 extends outwardly at an outer chine angle ε relative to the horizontal. The outer chine angle ε may be less than about 15 degrees, more than about 5 degrees or in the range of from about 5 degrees to about 15 degrees. Such angles may be particularly effective at throwing wash downwards rather than outwardly to assist with lift.

An outer chine width D, which is the length of each outer chine 60, 61 in a direction extending outwardly from the centreline 20, vee bottom section 30, retainer walls 40, 41 and outer hull sections 50, 51, may be sufficiently large to provide lift, particularly during turning. The outer chine width D may be less than the lower main section width A, the retainer wall height B and the outer hull width C. The outer hull width C may be less that about 0.2A, may be less thank about 0.1A and/or may be in the range of from about 0.03A to about 0.07A inclusive. Such sizing may be particularly effective for throwing wash downwards rather than outwardly to assist with lift.

The hull 11 may comprise hull sides 70, 71 extending from the stern section 15 towards the bow section 14 and along and outwardly/upwardly from the outer chines 60, 61. The hull sides 70, 71 may extend from the outer chines 60, 61 to the upper edge 13 of the hull 11. The hull sides 70, 71 may extend at a hull side angle ω relative to horizontal and the hull side angle ω may be in the range of from about 67 degrees to about 90 degrees inclusive.

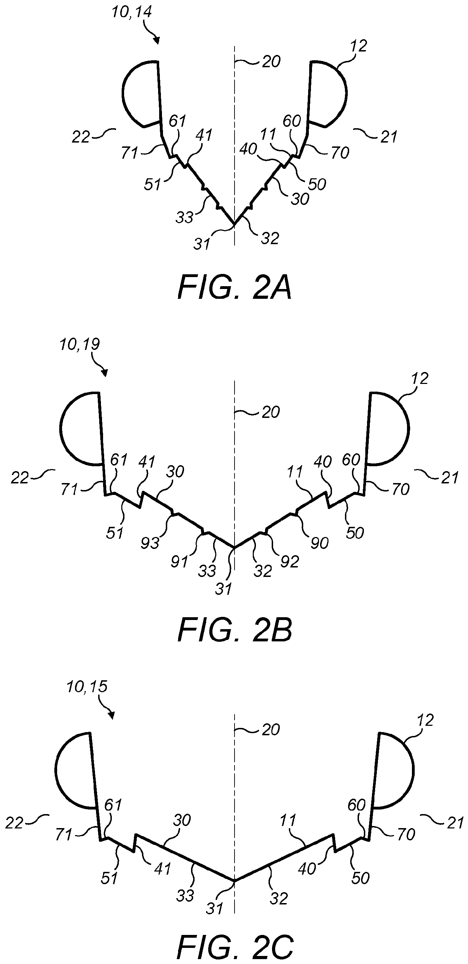

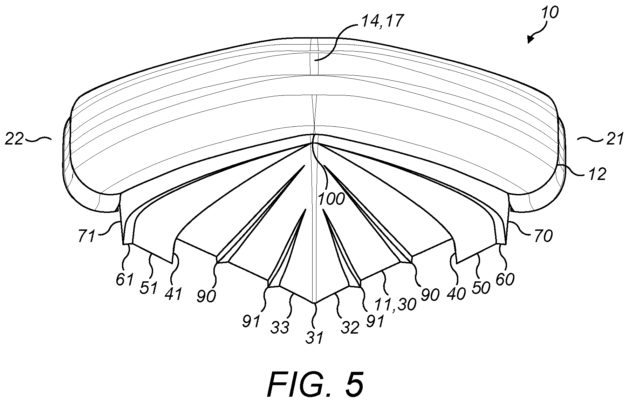

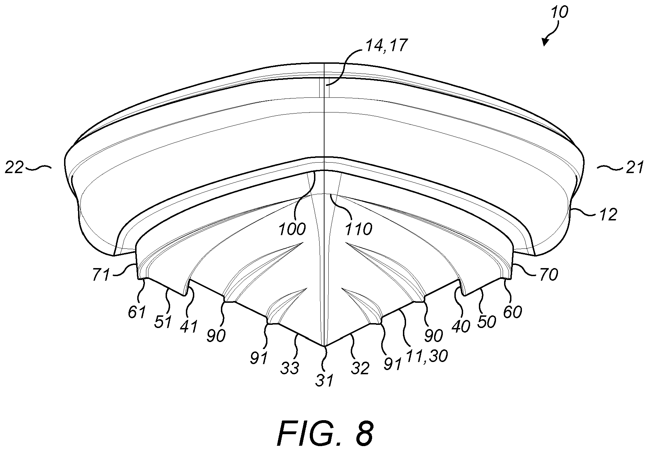

The bow section 14 comprises at least one spray deflector 100, 110 for deflecting spray from rising over the bow section 14. Figures 1 to 5 illustrate an embodiment of the marine vessel 10 comprising one spray deflector 100 and Figure 6 to 8 illustrate a further embodiment of the marine vessel 10 comprising two spray deflectors 100, 110. The spray deflectors 100, 110 are best shown in Figure 6, although the features of the spray deflector 100 of Figure 6 are substantially the same as the spray deflector 100 of Figures 1 to 5.

The at least one spray deflector 100, 110 comprises a deflection surface 101, 111 extending forwards downwardly and outwards downwardly for deflecting spray downwards and/or outwards rather than over the bow section 14. The deflection surface 101, 111 may extend forwards downwardly along the centreline 20 and outwards downwardly away from the centreline 20 on both the port and starboard sides 21, 22.

The deflection surface 101, 111 may be formed by the hull 11 and/or upper body 12. The deflection surface 101, 111 may extend around the hull bow 25 and/or vessel bow 17 and thus may be partially formed in each of the port and starboard sides 21, 22. The deflection surface 101, 111 may extend downwardly forwards from the stem 80, the hull bow 25, the upper body 12 and/or the upper edge 13 of the hull 11. The deflection surface 101, 111 may extend downwardly outwards from the vee bottom section 30, the retainer walls 40, 41, the outer hull sections 50, 51, the outer chines 60, 61 and/or the hull sides 70, 71.

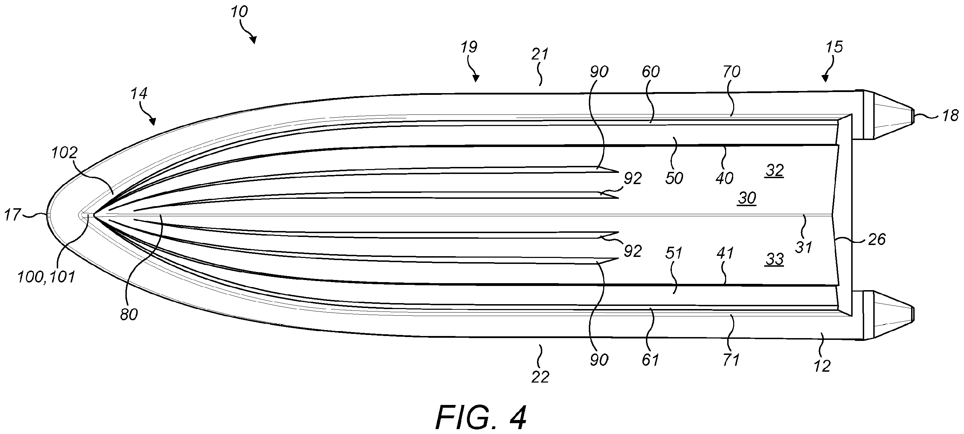

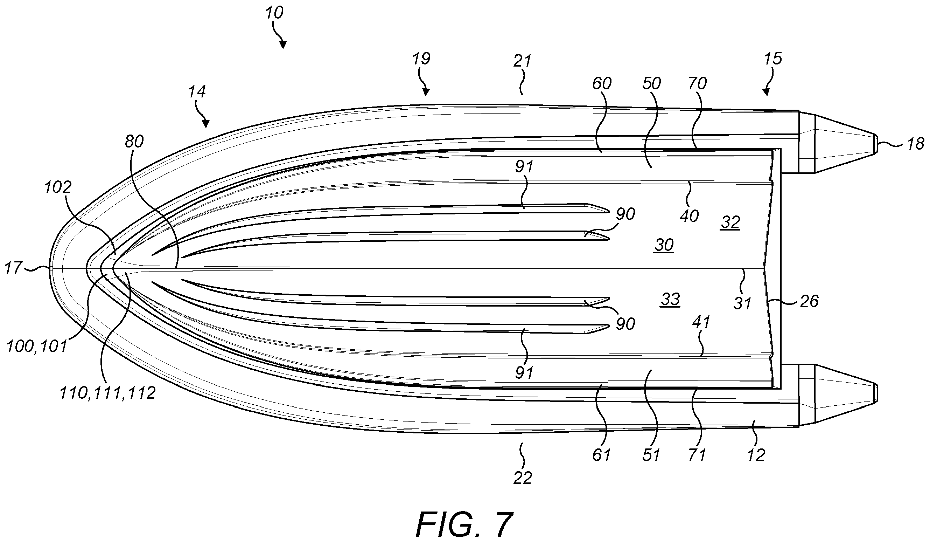

The at least one spray deflector 100 may comprise a deflection cavity 102, 112 formed between the deflection surface 101, 111 and the hull 11 and/or the upper body 12. The deflection cavity 102, 112 is an upwardly extending concave recess as illustrated. The deflection cavity 102, 112 may be substantially V-shaped, such as when the marine vessel is viewed in a bottom plan view as in Figures 4 and 7. The deflection cavity 102, 112 may extend around the bow section 14 partially along the port side 21, through the centreline and partially along the starboard side 22. The deflection cavity 102, 112 may extend along a portion of the bow section 14, such as along up to 75% of the length of the bow section 14 or along up to 20% of the length of the marine vessel 10 from the vessel bow 17.

The deflection surface 101, 111 extends from an inner deflection surface edge 103, 113 to an outer deflection surface edge 104, 114. The inner deflection surface edge 103, 113 is higher, above or upwardly from the outer deflection surface edge 104, 114. The deflection cavity 102, 112 may be bounded by the deflection surface 101, 111 and the hull 11, such as the hull sides 70, 71 or the vee bottom section 30.

The deflection surface 101, 111 may extend forwards by a length (i.e. from the hull 11, the stem 80 or the vee bottom section 30) that is greater than the outer chine width D. The deflection surface 101, 111 may extend forwards by a length of at least about 25 mm or at least about 50 mm, which may ensure that the deflection surface 101, 111 is sufficiently large to capture spray. The deflection surface 101, 111 may extend forwards by a length of less than about 200 mm or less than about 150 mm, which may ensure that the bow does not step back too significantly.

The deflection surface 101, 111 may extend forwards downwardly along the centreline 20 at a defection surface angle θ relative to the keel line 29 of the hull 11. The defection surface angle θ may be at least about 10 degrees, less than about 10 degrees or in the range of from about 10 degrees to about 30 degrees inclusive. Such a range may be particularly suitable for deflecting spray downwards during planing.

The upper body 12 comprises or at least partially forms the upper body spray deflector 100 of Figures 1 to 5 and the upper body spray deflector 100 of Figures 6 to 8. The upper body spray deflector 100 extends from the stem 80 at least partially around the upper edge 13 of the hull 11. The upper body 12 comprises the deflection surface 101 extending outwardly and forwards from the top of the stem 80 and upper edge 13 of the hull 11. The deflection cavity 102 is partially bounded by the upper body 12 and thus the upper body 12 comprises an upwardly extending concave recess on its lower side. The inner deflection surface edge 103 is at the upper edge 13 of the hull 11. The outer deflection surface edge 104 is at a lower edge of the upper body 12.

If the upper body 12 comprises a fender then the deflection surface 101 may be moulded as part of the fender (whether foam, inflatable or composite) or may be formed by machining away material if the fender is formed from foam or the like.

The hull 11 comprises the hull spray deflector 110 of Figures 6 to 8. The hull 11 comprises the deflection surface 111 located at the stem 80 and the hull 11 comprises the deflection cavity 112, which may in in the form of a concave recess extending upwardly into the stem 80 and/or hull 11. The hull 11 also comprises the inner and outer deflection surface edges 103. The hull spray deflector 110 may be formed during the moulding of the hull 11.

In the illustrated embodiment of the hull spray deflector 110 the outer chines 60, 61 comprise the deflection surface 111. In particular, the outer chines 60, 61 may extend around the hull bow 25 and project forwardly at the stem 80 to form the deflection surface 111. The outer chine width D may be greater than zero around the hull bow 25. The outer chine angle ε may increase to the hull bow 25 and may form the defection surface angle θ at the hull bow 25 in the plane of the centreline. Thus the outer chine angle ε may be at least about 10 degrees, less than about 10 degrees or in the range of from about 10 degrees to about 30 degrees inclusive at the hull bow 25. Preferably the outer chine angle ε is in the range from about 20 degrees to about 30 degrees inclusive at the hull bow 25. Therefore, the outer chines 60, 61 may be configured to effectively direct spray downwards. In addition, the retainer wall height B and outer hull width C may reduce to zero at the hull bow 25 as illustrated in Figure 6.

The deflection cavity 112 may be bounded by the outer chines 60, 61 forming the deflection surface 111, the vee bottom section 30 (particularly adjacent to the hull bow 25) and the outer hull sections 50, 51. The inner deflection surface edge 113 is along the meeting line of the outer hull sections 50, 51 and the outer chines 60, 61. The outer deflection surface edge 114 is along the meeting line of the outer hull sections 50, 51 and the hull sides 70, 71.

The upper and hull body spray deflectors 100, 110 may have different dimensions and the upper spray deflector 100 may be generally larger, by for example having a larger deflection cavity 102, than the hull body spray deflector 110. The upper body spray deflector 100 may extend forwards by a greater distance than the hull body spray deflector 110.

Including both the upper and hull body spray deflectors 100, 110 is particularly beneficial in smaller marine vessels 10, which are relatively closer to the water (i.e. the upper edge 13 is relatively closer to the water). The presence of both spray deflectors 100, 110 therefore assists with deflecting the relatively increased amount of spray.

Various alternative embodiments fall within the scope of the present disclosure. The marine vessel 10 may comprise a hull spray deflector 110 formed according to Figures 6 to 8 without the upper body spray deflector 100. A hull spray deflector 110 may be formed in the hull 11 by the retainer walls 40, 41 comprising the deflection surface 111 in a similar manner to the outer chines 60, 61 forming the deflection surface 111 in Figures 6 to 8.

## Claims

1. A marine vessel (10) comprising:
a bow section (14) extending from a vessel bow (17), a stern section (15) extending from a vessel stern (18) and a centreline (20); and
a planing hull (11) comprising:
a hull bow (25) adjacent to or forming the vessel bow (17) and a hull stern (26) forming the vessel stern (18), the bow section (14) comprising the hull bow (25) and the stern section (15) comprising the hull stern (26);
a vee bottom section (30) extending along the centreline (20) from the stern section (15) to the bow section (14), the vee bottom section (30) being V-shaped and forming a keel (31) of the marine vessel (10); and
a pair of retainer walls (40, 41) extending from the stern section (15) towards the bow section (14) along either side of the vee bottom section (30), wherein:
each retainer wall (40, 41) extends downwardly parallel to, or at an acute angle to, the centreline (20);
each retainer wall (40, 41) extends downwardly at a retainer wall angle β relative to horizontal, which is in the range of from 70 degrees to 90 degrees inclusive in the stern section (15);
the lowermost edges of the retainer walls (40, 41) rise away from the keel (31) from the hull stern (26) by the lowermost edges having a greater longitudinal angle (δ) than the keel (31), the longitudinal angle (δ) being the angle relative to the horizontal plane and a keel line (29), the keel line (29) extending along and projected from the keel (31); and
the vee bottom section (30) is configured to, in use, direct water outwardly from the centreline (20) towards the retainer walls (40, 41) and the retainer walls (40, 41) are configured to downwardly direct said outwardly directed water and prevent most of this wash from escaping outboard to an outer edge of the hull (11) for providing lift to the marine vessel (10).

2. A marine vessel (10) as claimed in claim 1 wherein the keel (31) is lower than the retainer walls (40, 41).

3. A marine vessel (10) as claimed in claim 1 or claim 2 wherein:
the vee bottom section (30) comprises a pair of lower main sections (32, 33) each extending outwardly from each side of the centreline (20) along a lower main section width A, the retainer walls (40, 41) extend along a retainer wall height B and the retainer wall height B is less than about 0.5A;
the vee bottom section (30) extends outwardly from the centreline (20) at a vee bottom angle α relative to horizontal, which is in the range of from about 18 degrees to about 28 degrees inclusive; and/or
the retainer walls (40, 41) extend from the hull stern (26) or are separated from the hull stern (26).

4. A marine vessel (10) as claimed in any one of the preceding claims wherein the bow section (14) comprises at least one spray deflector (100, 110) for deflecting spray from rising over the bow section (14), the at least one spray deflector (100, 110) comprising a deflection surface (101, 111) extending downwardly forwards along the centreline (20) and outwards from the centreline (20).

5. A marine vessel (10) as claimed in any one of the preceding claims further comprising an upper body (12) mounted to the hull (11), optionally wherein the upper body (12) comprises a fender, deck or gunwale.

6. A marine vessel (10) as claimed in claim 4 or claim 5 wherein:
the keel (31) extends along a keel line (29) and the deflection surface (101, 111) extends downwardly forwards along the centreline (20) at a deflection surface angle relative to the keel line (29) in the range of from 10 degrees to 30 degrees inclusive;
the at least one spray deflector (100, 110) comprises an upper body spray deflector (100) comprising a deflection surface (101) formed by the upper body (12) and a deflection cavity (102) formed between the deflection surface (101) and the hull (11); and/or
the hull (11) comprises a stem (80) and an upper edge (13) to which the upper body (12) is mounted, wherein the upper body spray deflector (100) extends from the stem (80) at least partially around the upper edge (13) of the hull (11).

7. A marine vessel (10) as claimed in claim 6 wherein the deflection cavity (102) of the upper body spray deflector (100) is partially bounded by the upper body (12) and is formed by an upwardly extending concave recess in the upper body (12).

8. A marine vessel (10) as claimed in any one of the preceding claims comprising outer hull sections (50, 51) extending from the stern section (15) towards the bow section (14) and along and outwardly from the retainer walls (40, 41).

9. A marine vessel (10) as claimed in claim 8 comprising outer chines (60, 61) extending from the stern section (15) towards the bow section (14) and along and outwardly from the outer hull sections (50, 51).

10. A marine vessel (10) as claimed in claim 9 comprising hull sides (70, 71) extending from the stern section (15) towards the bow section (14) and along and outwardly from the outer chines (60, 61).

11. A marine vessel (10) as claimed in any one of claims 4 to 10 wherein:
the at least one spray deflector (110) comprises a hull spray deflector (110) comprising a deflection surface (111) formed by the hull (11) and a deflection cavity (112) formed between the deflection surface (111) and the hull (11); and/or
the hull (11) comprises a stem (80) and the deflection surface (111) is located at the stem (80), wherein the hull (11) comprises the deflection cavity (112) in the form of a concave recess extending upwardly into the stem (80) and hull (11).

12. A marine vessel (10) as claimed in claim 11 when dependent upon claim 9 or claim 10 wherein the outer chines (60, 61) extend around the bow section (14) and comprise the deflection surface (111) of the hull spray deflector (110).

13. A marine vessel (10) as claimed in claim 12 wherein the deflection cavity (112) of the hull spray deflector (110) is bounded by the outer chines (60, 61) forming the deflection surface (111), the vee bottom section (30) and the outer hull sections (50, 51).

14. A method of operating a marine vessel (10) comprising:
a bow section (14) extending from a vessel bow (17), a stern section (15) extending from a vessel stern (18) and a centreline (20); and
a planing hull (11) comprising:
a hull bow (25) adjacent to or forming the vessel bow (17) and a hull stern (26) forming the vessel stern (18), the bow section (14) comprising the hull bow (25) and the stern section (15) comprising the hull stern (26);
a vee bottom section (30) extending along the centreline (20) from the stern section (15) to the bow section (14), the vee bottom section (30) being V-shaped and forming a keel (31) of the marine vessel (10); and
a pair of retainer walls (40, 41) extending from the stern section (15) towards the bow section (14) along either side of the vee bottom section (30), wherein:
each retainer wall (40, 41) extends downwardly parallel to, or at an acute angle to, the centreline (20);
each retainer wall (40, 41) extends downwardly at a retainer wall angle β relative to horizontal, which is in the range of from 70 degrees to 90 degrees inclusive in the stern section (15);
the lowermost edges of the retainer walls (40, 41) rise away from the keel (31) from the hull stern (26) by the lowermost edges having a greater longitudinal angle (δ) than the keel (31), the longitudinal angle (δ) being the angle relative to the horizontal plane and a keel line (29), the keel line (29) extending along and projected from the keel (31); and
the method comprises propelling the marine vessel (10) through water such that the vee bottom section (30) directs water outwardly from the centreline (20) towards the retainer walls (40, 41) and the retainer walls (40, 41) downwardly direct said outwardly directed water and prevent most of this wash from escaping outboard to an outer edge of the hull (11) such that lift is provided to the marine vessel (10).

15. A method as claimed in claim 14 wherein the bow section (14) comprises at least one spray deflector (100, 110), the at least one spray deflector (100, 110) comprising a deflection surface (101, 111) extending downwardly forwards along the centreline (20) and outwards from the centreline (20), wherein the method comprises propelling the marine vessel (10) through the water such that the at least one spray deflector (100, 110) deflects spray from rising over the bow section (14).

## Patentansprüche

1. Wasserfahrzeug (10), umfassend:
einen Bugabschnitt (14), welcher sich von einem Fahrzeugbug (17) erstreckt, einen Heckabschnitt (15), welcher sich von einem Fahrzeugheck (18) erstreckt, und eine Mittellinie (20); und
eine planierenden Rumpf (11), umfassend:
einen Rumpfbug (25), benachbart zu oder den Fahrzeugbug (17) bildend und ein Rumpfheck (26), welches das Fahrzeugheck (18) bildet, wobei der Bugabschnitt (14) den Rumpfbug (25) umfasst und den Heckabschnitt (15) das Rumpfheck (26) umfasst;
einen V-Bodenabschnitt (30), welcher sich entlang der Mittellinie (20) von dem Heckabschnitt (15) zu dem Bugabschnitt (14) erstreckt, wobei der V-Bodenabschnitt (30) V-förmig ist und einen Kiel (31) des Wasserfahrzeugs (10) bildet; und
ein Paar von Haltewänden (40, 41), welche sich von dem Heckabschnitt (15) in Richtung des Bugabschnitts (14) entlang jeder Seite des V-Bodenabschnitts (30) erstrecken, wobei:
sich jede Haltewand (40, 41) nach unten parallel zu oder unter einem spitzen Winkel zu der Mittellinie (20) erstreckt;
sich jede Haltewand (40, 41) nach unten bei einem Haltewand-Winkel β bezüglich der Horizontalen, welcher in dem Bereich von 70 Grad bis einschließlich 90 Grad liegt, in dem Heckabschnitt (15) erstreckt;
sich die untersten Ränder der Haltewände (40, 41) weg von dem Kiel (31) von dem Rumpfheck (26) erheben, indem die untersten Ränder einen größeren longitudinalen Winkel (δ) als der Kiel (31) aufweisen, wobei der longitudinale Winkel (δ) der Winkel bezüglich der horizontalen Ebene und einer Kiellinie (29) ist, wobei sich die Kiellinie (29) entlang des Kiels (31) und davon projiziert erstreckt; und
der V-Bodenabschnitt (30) dazu eingerichtet ist, in Verwendung Wasser nach außen von der Mittellinie (20) in Richtung der Haltewände (40, 41) zu richten, und die Haltewände (40, 41) dazu eingerichtet sind, das nach außen gerichtete Wasser nach unten zu richten und einen Großteil dieses Wellenschlags daran zu hindern, nach außenbords zu einem äußeren Rand des Rumpfs (11) zu entweichen, um Auftrieb für das Wasserfahrzeug (10) bereitzustellen.

2. Wasserfahrzeug (10) nach Anspruch 1, wobei der Kiel (31) niedriger als die Haltewände (40, 41) ist.

3. Wasserfahrzeug (10) nach Anspruch 1 oder Anspruch 2, wobei:
der V-Bodenabschnitt (30) ein Paar von unteren Hauptabschnitten (32, 33) umfasst, welche sich nach außen von jeder Seite der Mittellinie (20) entlang einer unteren Hauptabschnitt-Breite A erstrecken, wobei sich die Haltewände (40, 41) entlang einer Haltewand-Höhe B erstrecken und die Haltewand-Höhe B weniger als etwa 0,5A beträgt;
sich der V-Bodenabschnitt (30) nach außen von der Mittellinie (20) bei einem V-Bodenwinkel α bezüglich der Horizontalen erstreckt, welcher in dem Bereich von etwa 18 Grad bis einschließlich etwa 28 Grad liegt; und/oder
sich die Haltewände (40, 41) von dem Rumpfheck (26) erstrecken oder von dem Rumpfheck (26) getrennt sind.

4. Wasserfahrzeug (10) nach einem der vorhergehenden Ansprüche, wobei der Bugabschnitt (14) wenigstens einen Sprühwasser-Abweiser (100, 110) zum Abweisen von Sprühwasser von einem Ansteigen über den Bugabschnitt (14) umfasst, wobei der wenigstens eine Sprühwasser-Abweiser (100, 110) eine Abweisungsfläche (101, 111) umfasst, welche sich nach unten vorwärts entlang der Mittellinie (20) und nach außen von der Mittellinie (20) erstreckt.

5. Wasserfahrzeug (10) nach einem der vorhergehenden Ansprüche, ferner umfassend einen oberen Körper (12), welcher an dem Rumpf (11) montiert ist, wobei optional der obere Körper (12) einen Fender, ein Deck oder ein Schandeck umfasst.

6. Wasserfahrzeug (10) nach Anspruch 4 oder Anspruch 5, wobei:
sich der Kiel (31) entlang einer Kiellinie (29) erstreckt und sich die Abweisungsfläche (101, 111) nach unten vorwärts entlang der Mittellinie (20) bei einem Abweisungsflächen-Winkel bezüglich der Kiellinie (29) in dem Bereich von 10 Grad bis einschließlich 30 Grad erstreckt;
der wenigstens eine Sprühwasser-Abweiser (100, 110) einen Sprühabweiser (100) des oberen Körpers, welcher eine durch den oberen Körper (12) gebildete Abweisungsfläche (101) umfasst, und einen Abweisungshohlraum (102) umfasst, welcher zwischen der Abweisungsfläche (101) und dem Rumpf (11) gebildet ist;
und/oder
der Rumpf (11) einen Steven (80) und einen oberen Rand (13) umfasst, an welchem der obere Körper (12) montiert ist, wobei sich der Sprühwasser-Abweiser (100) des oberen Körpers von dem Steven (80) wenigstens teilweise um den oberen Rand (13) des Rumpfs (11) erstreckt.

7. Wasserfahrzeug (10) nach Anspruch 6, wobei der Abweisungshohlraum (102) des Sprühwasser-Abweisers (100) des oberen Körpers teilweise durch den oberen Körper (12) begrenzt ist und durch eine sich nach oben erstreckende konkave Ausnehmung in dem oberen Körper (12) gebildet ist.

8. Wasserfahrzeug (10) nach einem der vorhergehenden Ansprüche, umfassend äußere Rumpfabschnitte (50, 51), welche sich von dem Heckabschnitt (15) in Richtung des Bugabschnitts (14) und entlang und nach außen von den Haltewänden (40, 41) erstrecken.

9. Wasserfahrzeug (10) nach Anspruch 8, umfassend äußere Glocken (60, 61), welche sich von dem Heckabschnitt (15) in Richtung des Bugabschnitts (14) und entlang und nach außen von den äußeren Rumpfabschnitten (50, 51) erstrecken.

10. Wasserfahrzeug (10) nach Anspruch 9, umfassend Rumpfseiten (70, 71), welche sich von dem Heckabschnitt (15) in Richtung des Bugabschnitts (14) und entlang und nach außen von den äußeren Glocken (60, 61) erstrecken.

11. Wasserfahrzeug (10) nach einem der Ansprüche 4 bis 10, wobei:
der wenigstens eine Sprühwasser-Abweiser (110) einen Rumpf-Sprühwasser-Abweiser (110), welcher eine Abweisungsfläche (111) umfasst, welche durch den Rumpf (11) gebildet ist, und einen Abweisungshohlraum (112) umfasst, welcher zwischen der Abweisungsfläche (111) und dem Rumpf (11) gebildet ist; und/oder der Rumpf (11) einen Steven (80) umfasst und die Abweisungsfläche (111) an dem Steven (80) angeordnet ist, wobei der Rumpf (11) den Abweisungshohlraum (112) in der Form einer konkaven Ausnehmung umfasst, welche sich nach oben in den Steven (80) und den Rumpf (11) erstreckt.

12. Wasserfahrzeug (10) nach Anspruch 11, wenn dieser von Anspruch 9 oder Anspruch 10 abhängt, wobei sich die äußeren Glocken (60, 61) um den Bugabschnitt (14) herum erstrecken und die Abweisungsfläche (111) des Rumpf-Sprühwasser-Abweisers (110) umfassen.

13. Wasserfahrzeug (10) nach Anspruch 12, wobei der Abweisungshohlraum (112) des Rumpf-Sprühwasser-Abweisers (110) durch die äußeren Glocken (60, 61), welche die Abweisungsfläche (111) bilden, den V-Bodenabschnitt (30) und die äußeren Rumpfabschnitte (50, 51) begrenzt ist.

14. Verfahren zum Betreiben eines Wasserfahrzeugs (10), umfassend:
einen Bugabschnitt (14), welcher sich von einem Fahrzeugbug (17) erstreckt, einen Heckabschnitt (15), welcher sich von einem Fahrzeugheck (18) erstreckt, und eine Mittellinie (20); und
eine planierenden Rumpf (11), umfassend:
einen Rumpfbug (25), benachbart zu oder den Fahrzeugbug (17) bildend und ein Rumpfheck (26), welches das Fahrzeugheck (18) bildet, wobei der Bugabschnitt (14) den Rumpfbug (25) umfasst und den Heckabschnitt (15) das Rumpfheck (26) umfasst;
einen V-Bodenabschnitt (30), welcher sich entlang der Mittellinie (20) von dem Heckabschnitt (15) zu dem Bugabschnitt (14) erstreckt, wobei der V-Bodenabschnitt (30) V-förmig ist und einen Kiel (31) des Wasserfahrzeugs (10) bildet; und
ein Paar von Haltewänden (40, 41), welche sich von dem Heckabschnitt (15) in Richtung des Bugabschnitts (14) entlang jeder Seite des V-Bodenabschnitts (30) erstrecken, wobei:
sich jede Haltewand (40, 41) nach unten parallel zu oder unter einem spitzen Winkel zu der Mittellinie (20) erstreckt;
sich jede Haltewand (40, 41) nach unten bei einem Haltewand-Winkel β bezüglich der Horizontalen, welcher in dem Bereich von 70 Grad bis einschließlich 90 Grad liegt, in dem Heckabschnitt (15) erstreckt;
sich die untersten Ränder der Haltewände (40, 41) weg von dem Kiel (31) von dem Rumpfheck (26) erheben, indem die untersten Ränder einen größeren longitudinalen Winkel (δ) als der Kiel (31) aufweisen, wobei der longitudinale Winkel (δ) der Winkel bezüglich der horizontalen Ebene und einer Kiellinie (29) ist, wobei sich die Kiellinie (29) entlang des Kiels (31) und davon projiziert erstreckt;
und
das Verfahren ein Antreiben des Wasserfahrzeugs (10) durch Wasser derart umfasst, dass der V-Bodenabschnitt (30) Wasser nach außen von der Mittellinie (20) in Richtung der Haltewände (40, 41) richtet und die Haltewände (40, 41) das nach außen gerichtete Wasser nach unten richten und einen Großteil dieses Wellenschlags daran hindern, nach außenbords zu einem äußeren Rand des Rumpfs (11) zu entweichen, so dass Auftrieb für das Wasserfahrzeug (10) bereitgestellt wird.

15. Verfahren nach Anspruch 14, wobei der Bugabschnitt (14) wenigstens einen Sprühwasser-Abweiser (100, 110) umfasst, wobei der wenigstens eine Sprühwasser-Abweiser (100, 110) eine Abweisungsfläche (101, 111) umfasst, welche sich nach unten vorwärts entlang der Mittellinie (20) und nach außen von der Mittellinie (20) erstreckt, wobei das Verfahren ein Antreiben des Wasserfahrzeugs (10) durch das Wasser derart umfasst, dass der wenigstens eine Sprühwasser-Abweiser (100, 110) Sprühwasser davon abweist, über den Bugabschnitt (14) anzusteigen.

## Revendications

1. Vaisseau marin (10) comprenant :
une section de proue (14) s'étendant depuis la proue de vaisseau (17), une section de poupe (15) s'étendant depuis la poupe de vaisseau (18) et une ligne médiane (20) ; et
une coque (11) planante comprenant :
une proue de coque (25) adjacente à et formant la proue de vaisseau (17) et une poupe de coque (26) formant la poupe de vaisseau (18), la section de proue (14) comprenant la proue de coque (25) et la section de poupe (15) comprenant la poupe de coque (26) ;
une section de fond en V (30) s'étendant le long de la ligne médiane (20) depuis la section de poupe (15) jusqu'à la section de proue (14), la section de fond en V (30) étant formée en V et formant une quille (31) du vaisseau marin (10) ; et
une paire de parois de retenue (40, 41) s'étendant depuis la section de poupe (15) vers la section de proue (14) le long de chaque côté de la section de fond en V (30), dans lequel :
chaque paroi de retenue (40, 41) s'étend vers le bas parallèlement à, ou selon un angle aigu par rapport à, la ligne médiane (20) ;
chaque paroi de retenue (40, 41) s'étend vers le bas à un angle de paroi de retenue β par rapport à l'horizontale, qui est compris dans l'intervalle de 70 degrés à 90 degrés inclus dans la section de poupe (15) ;
les bords les plus bas des parois de retenue (40, 41) remontent en s'éloignant de la quille (31) depuis la poupe de coque (26) par les bords les plus bas présentant un angle longitudinal (δ) plus grand que la quille (31), l'angle longitudinal (δ) étant l'angle par rapport au plan horizontal et une ligne de quille (29), la ligne de quille (29) s'étendant le long de et en projection depuis la quille (31) ; et
la section de fond en V (30) est configurée, lors de l'utilisation, pour diriger l'eau vers l'extérieur depuis la ligne médiane (20) vers les parois de retenue (40, 41) et les parois de retenue (40, 41) sont configurés pour diriger vers le bas ladite eau dirigée vers l'extérieur et empêche la majeure partie de cette projection d'eau de s'échapper hors-bord jusqu'à un bord externe de la coque (11) de telle sorte qu'une portance soit appliquée au vaisseau marin (10).

2. Vaisseau marin (10) selon la revendication 1, dans lequel comprenant dans lequel la quille (31) est plus basse que les parois de retenue (40, 41).

3. Vaisseau marin (10) selon la revendication 1 ou la revendication 2, dans lequel :
la section de fond en V (30) comprend une paire de sections principales inférieures (32, 33) s'étendant chacune vers l'extérieur depuis chaque côté de la ligne médiane (20) le long d'une largeur A de section principale inférieure A, les parois de retenue (40, 41) s'étendent le long d'une hauteur de paroi de retenue B et la hauteur de paroi de retenue B est inférieure à environ 0,5 A ;
la section de fond en V (30) s'étend vers l'extérieur depuis la ligne médiane (20) selon un angle de fond en V α par rapport à l'horizontale, qui est compris dans l'intervalle entre environ 18 degrés et environ 28 degrés inclus, et/ou
les parois de retenue (40, 41) s'étendent depuis la poupe de coque (26) ou sont séparées de la poupe de coque (26).

4. Vaisseau marin (10) selon l'une quelconque des revendications précédentes, dans lequel la section de proue (14) comprend au moins un déflecteur de projections (110) pour empêcher les projections d'eau de monter par-dessus de la section de proue (14), l'au moins un déflecteur de projections (100, 110) comprenant une surface de déflexion (101, 111) s'étendant vers le bas, vers l'avant le long de la ligne médiane (20) et vers l'extérieur depuis la ligne médiane (20).

5. Vaisseau marin (10) selon l'une quelconque des revendications précédentes, comprenant en outre un corps supérieur (12) monté sur la coque (11), optionnellement dans lequel le corps supérieur (12) comprend une aile, un pont ou un bordé.

6. Vaisseau marin (10) selon la revendication 4 ou la revendication 5, dans lequel :
la quille (31) s'étend le long d'une ligne de quille (29) et la surface de déflexion (101, 111) s'étend vers le bas vers l'avant le long de la ligne médiane (20) selon un angle de surface de déflexion par rapport à la ligne de quille (29) compris dans l'intervalle entre 10 degrés et 30 degrés inclus ;
l'au moins un déflecteur de projections (100, 110) comprend un déflecteur de projections de corps supérieur (100) comprenant une surface de déflexion (101) formée par le corps supérieur (12) et une cavité de déflexion (102) formée entre la surface de déflexion (101) et la coque (11) ; et/ou
la coque (11) comprend une tige (80) et un bord supérieur (13) sur lequel le corps supérieur (12) est monté, dans lequel le déflecteur de projections de corps supérieur (100) s'étend depuis la tige (80) au moins partiellement autour du bord supérieur (13) de la coque (11).

7. Vaisseau marin (10) selon la revendication 6, dans lequel la cavité de déflexion (102) du déflecteur de projections de corps supérieur (100) est partiellement délimitée par le corps supérieur (12) et est formée par un évidement concave s'étendant vers le haut dans le corps supérieur (12).

8. Vaisseau marin (10) selon l'une quelconque des revendications précédentes, comprenant des sections de coque externes (50, 51) s'étendant depuis la section de poupe (15) vers la section de proue (14) et le long et vers l'extérieur des parois de retenue (40, 41).

9. Vaisseau marin (10) selon la revendication 8, comprenant des bouchains externes (60, 61) s'étendant depuis la section de poupe (15) vers la section de proue (14) et le long et vers l'extérieur des sections de coque externes (50, 51) (50, 51).

10. Vaisseau marin (10) selon la revendication 9, comprenant des côtés de coque (70, 71) s'étendant depuis la section de poupe (15) vers la section de proue (14) et le long et vers l'extérieur des bouchains externes (60, 61).

11. Vaisseau marin (10) selon l'une quelconque des revendications 4 à 10, dans lequel :
l'au moins un déflecteur de projections (110) comprennent un déflecteur de projections de coque (110) comprenant une surface de déflexion (111) formée par la coque (11) et une cavité de déflexion (112) formée entre la surface de déflexion (111) et la coque (11) ; et/ou
la coque (11) comprend une tige (80) et la surface de déflexion (111) est située au niveau de la tige (80), dans lequel la coque (11) comprenant la cavité de déflexion (112) sous la forme d'un évidement concave s'étendant vers le haut dans la tige (80) et la coque (11).

12. Vaisseau marin (10) selon la revendication 11 lorsqu'elle dépend de la revendication 9 ou de la revendication 10, dans lequel les bouchains externes (60, 61) s'étendent autour de la section de proue (14) et comprennent la surface de déflexion (111) du déflecteur de projections (110) de coque.

13. Vaisseau marin (10) selon la revendication 12, dans lequel la cavité de déflexion (112) du déflecteur de projections (110) de coque est délimitée par les bouchains externes (60, 61) formant la surface de déflexion (111), la section de fond en V (30) et les sections de coque externes (50, 51).

14. Procédé d'exploitation d'un vaisseau marin (10) comprenant :
une section de proue (14) s'étendant depuis la proue de vaisseau (17), une section de poupe (15) s'étendant depuis la poupe de vaisseau (18) et une ligne médiane (20) ; et
une coque (11) planante comprenant :
une proue de coque (25) adjacente à et formant la proue de vaisseau (17) et une poupe de coque (26) formant la poupe de vaisseau (18), la section de proue (14) comprenant la proue de coque (25) et la section de poupe (15) comprenant la poupe de coque (26) ;
une section de fond en V (30) s'étendant le long de la ligne médiane (20) depuis la section de poupe (15) jusqu'à la section de proue (14), la section de fond en V (30) étant formée en V et formant une quille (31) du vaisseau marin (10) ; et
une paire de parois de retenue (40, 41) s'étendant depuis la section de poupe (15) vers la section de proue (14) le long de chaque côté de la section de fond en V (30), dans lequel :
chaque paroi de retenue (40, 41) s'étend vers le bas parallèlement à, ou selon un angle aigu par rapport à, la ligne médiane (20) ;
chaque paroi de retenue (40, 41) s'étend vers le bas à un angle de paroi de retenue β par rapport à l'horizontale, qui est compris dans l'intervalle de 70 degrés à 90 degrés inclus dans la section de poupe (15) ;
les bords les plus bas des parois de retenue (40, 41) remontent en s'éloignant de la quille (31) depuis la poupe de coque (26) par les bords les plus bas présentant un angle longitudinal (δ) plus grand que la quille (31), l'angle longitudinal (δ) étant l'angle par rapport au plan horizontal et une ligne de quille (29), la ligne de quille (29) s'étendant le long de et en projection depuis la quille (31) ; et
le procédé comprend la propulsion du vaisseau marin (10) à travers l'eau de telle sorte que la section de fond en V (30) dirige l'eau vers l'extérieur depuis la ligne médiane (20) vers les parois de retenue (40, 41) et les parois de retenue (40, 41) dirigent vers le bas ladite eau dirigée vers l'extérieur et empêche la majeure partie de cette projection d'eau de s'échapper hors-bord jusqu'à un bord externe de la coque (11) de telle sorte qu'une portance soit appliquée au vaisseau marin (10).

15. Procédé selon la revendication 14, dans lequel la section de proue (14) comprend au moins un déflecteur de projections (110), l'au moins un déflecteur de projections (100, 110) comprenant une surface de déflexion (101, 111) s'étendant vers le bas vers l'avant le long de la ligne médiane (20) et vers l'extérieur depuis la ligne médiane (20), dans lequel le procédé comprend la propulsion du vaisseau marin (10) à travers l'eau de telle sorte que l'au moins un déflecteur de projections (100, 110) empêchent les projections d'eau de monter par-dessus la section de proue (14).
